# EUROPEAN PATENT SPECIFICATION

(11) **EP 3 482 097 B1**
(45) Date of publication and mention of the grant of the patent: **25.08.2021**
(21) Application number: 17739544.9
(22) Date of filing: 11.07.2017
(51) Int. Cl.: F16D 13/72

(54) **CLUTCH COVER WITH INCREASED COOLING PERFORMANCE**
KUPPLUNGSHÜLLE MIT VERBESSERTER KÜHLLEISTUNG
COUVERCLE D'EMBRAYAGE À PERFORMANCE DE REFROIDISSEMENT ACCRUE

(30) Priority: 11.07.2016 TR 201609564
(43) Date of publication of application: 15.05.2019
(73) Proprietor: Valeo Otomotiv Sanayi ve Ticaret A.S., 34854 Istanbul (TR)
(72) Inventor: CAKMAK, Tolga, 16240 Bursa (TR); PEHLIVAN, Ahmet Koray, 16240 Bursa (TR)
(74) Representative: Cardon, Nicolas
(86) International application number: PCT/EP2017/067415
(87) International publication number: WO 2018/011214

(56) References cited:
- CN-U- 204 755 644
- US-A1- 2012 080 287
- US-A1- 2012 186 936

## Description

### TECHNICAL FIELD

The present invention relates to a cover used in frictional clutches positioned between the engine outlet and the transmission shaft and providing power transfer by means of friction link in tractors.

### PRIOR ART

In tractors, there are frictional clutches positioned between the engine outlet and the transmission shaft and providing power transfer by means of friction link. The frictional clutch has a cover. Drive arms are controlled by means of control arms provided on said cover and the movement of the pressure portion is provided.

Frictional clutches are heated due to frictions during use. This heating leads to reduction in the strength of parts, shortening of the lifetimes, reduction in the performances, and changing of the friction characteristics on the rubbing surfaces. Document US 2012/080287 A, for example, describes a friction clutch assembly wherein the clutch cover has apertures allowing the ingress and egress of air for cooling. The pressure plate and the flywheel plate also have radial channels allowing air to flow within them for cooling.

As a result, because of all of the abovementioned problems, an improvement is required in the related technical field.

### BRIEF DESCRIPTION OF THE INVENTION

The present invention relates to a cover for frictional clutches for use in tractors, for eliminating the above mentioned disadvantages and for bringing new advantages to the related technical field.

The main object of the present invention is to provide a cover which reduces the heating problems of frictional clutch in tractors.

In order to realize all of the abovementioned objects and the objects which are to be deducted from the detailed description below, the present invention is a friction clutch cover having a body portion in circular form comprising an outer wall and an inner wall facing an inner gap provided at the center thereof, in order to be used in frictional clutches positioned between the engine outlet and the transmission shaft in tractors. As an improvement, the subject matter cover comprises at least one channel extending from the inner wall towards the outer wall inside the body portion. Thus, air input is provided into the cover during rotation of the cover and the cover is cooled by means of convectional heat transfer.

The invention can exhibit one or another of the characteristics described below, combined with one another or taken independently of one another:
In a preferred embodiment of the invention, the channel is provided in a non-linear form. Moreover, in a preferred embodiment of the invention, the channel is provided in arc form. Thus, the heat transfer area and the heat transfer performance are increased by increasing the length of the channel.

According to the invention, pluralities of channels are provided inside the body portion such that there is a specific distance in between. Thus, channels are increased in number and the heat transfer area is increased without changing the weight center of the cover.

According to the invention, each channel comprises one each symmetry channels which pass through the center of the body portion and provided in a symmetric manner with respect to the symmetry axes which separate the body portion into four regions. Thus, cooling of the cover during rotation in both directions is provided. Moreover, thanks to the symmetry, changing of the weight center is prevented.

In a preferred embodiment of the invention, at least one discharge opening is provided which opens outwardly and which extends from at least one of the channels towards a lateral surface of the body portion. Thus, in cases where the channels cannot be opened outwardly from the outer wall, the air entering into the channel is discharged.

In a preferred embodiment of the invention, pluralities of discharge openings are provided in a connected manner to the channel and to the symmetry channels. Thus, the air, entering into the channel and into the symmetry channels, is discharged.

In a preferred embodiment of the invention, the cover comprises lateral extensions extending outwardly from an outer wall of the body portion, the lateral extensions are ordered so as to be coupled to a flywheel.

In a preferred embodiment of the invention, the cover comprises a frictional surface ordered to rub onto a friction disc.

In a preferred embodiment of the invention, the cover comprises at least one channel provided on an imaginary plane defined in a parallel manner in the axial distance with respect to said frictional surface and provided along a curve extending from the inner diameter of said body portion towards the outer diameter of said body portion.

Advantageously, the cover comprises a symmetry plane which is perpendicular to said imaginary plane and a symmetry channel with respect to said symmetry plane of said channel.

In a preferred embodiment of the present invention, the symmetry plane passes through the center of the cover. The symmetry plane passes through the axis of revolution of the cover.

In a preferred embodiment of the present invention, the imaginary plane is located between the frictional surface and the lateral surface of the body portion.

In a preferred embodiment of the present invention, the channel is provided in arc form and the axis of the arc form is arranged radially offset in relation to the axis of revolution.

This cover according to the present invention has the advantage of increasing the heat convection surface.

A further object of the invention is to propose a frictional clutch comprising at least a friction disc and a cover as defined above, said cover comprising a frictional surface which rubs onto the friction disc.

This frictional clutch according to the further object of the invention has the advantage of increasing the heat convection surface inside of the cover without changing the external envelope of the frictional clutch.

### BRIEF DESCRIPTION OF THE FIGURES

In Figure 1, a representative isometric view of the subject matter cover is given.
In Figure 2, a representative cross-sectional view of the subject matter cover is given.
In Figure 3, another representative cross-sectional view of the subject matter cover is given.
In Figure 4, a cross-sectional view of a frictional clutch comprising the subject matter cover is given.

### REFERENCE NUMBERS

- 10: Cover
- 20: Body portion
- 21: Lateral surface
- 22: Outer wall
- 23: Inner wall
- 24: Discharge opening
- 25: Inner gap
- 26: Channel
- 27: Symmetry channel
- 28: Column
- 29: Frictional surface
- 30: Lateral extension
- 40: Lateral gap
- 50: Connection flap
- 60: Frictional clutch
- 61: Control lever
- 62: pin
- 63: Actuation lever
- 64: External friction disc
- 65: Internal friction disc

### DETAILED DESCRIPTION OF THE INVENTION

In this detailed description, the subject matter frictional clutch cover 10 for tractors is explained with references to examples without forming any restrictive effect only in order to make the subject more understandable.

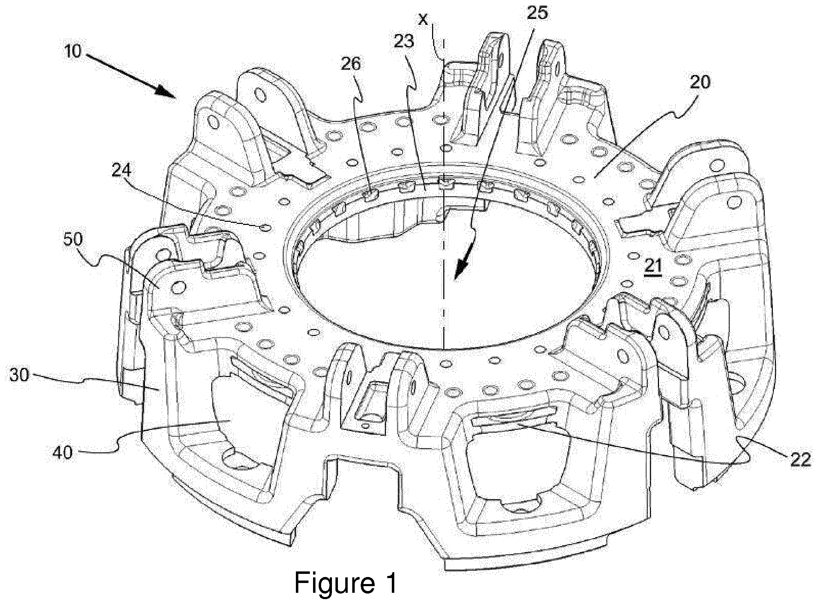

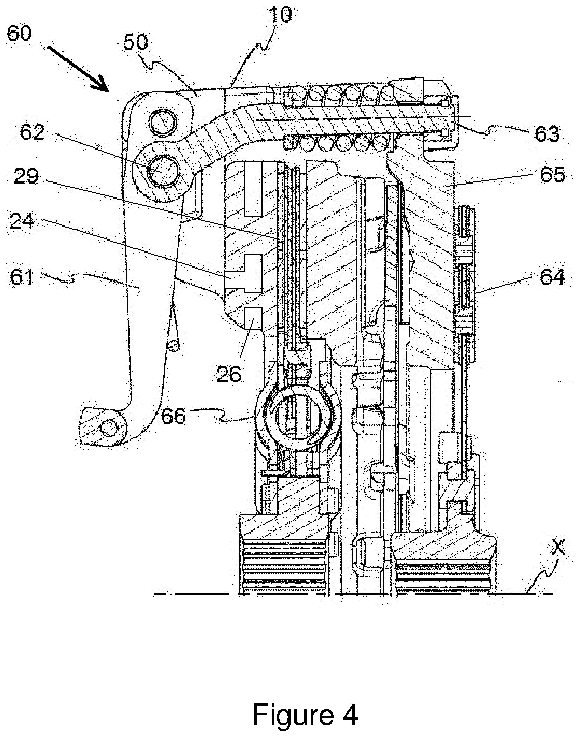

The subject matter cover 10 has a circular body portion 20 around the axis of revolution X. There are lateral extensions 30 extending outwardly from an outer wall 22 of the body portion 20. There is at least one lateral gap 40 provided on the lateral extension 30. The lateral extensions 30 are ordered so as to be coupled to a flywheel (not illustrated in figures 1 and 4).

Connection flaps 50 are provided at a direction which is opposite to the extension direction of the lateral extensions 30 on the body portion 20. The assembly of the control arms (not illustrated in figure 1) is realized by means of connection flaps 50. An inner gap 25 is provided at the center of the body portion 20. The side of the body portion 20 facing the inner gap 25 is defined as an inner wall 23.

A frictional clutch 60 comprising the cover 10 is illustrated in Figure 4. The frictional clutch 60 is used for the control of movement transfer from the motor to the transmission and to the tail axle in tractors. Accordingly, the movement received from the motor is transferred to the tail axle by means of friction between a pressure plate 65 and an external friction disc 64 connected to the tail axle.

In an exemplary embodiment of said frictional clutch 60, said pressure plate 65 is positioned between the external disc 64 and the cover 10. A control lever 61 is connected onto said connection flap 50 by means of a pin 62 so as to have rotation freedom. An actuation lever 63 connected to said control lever 61 from one side, and connected to the pressure plate 65 from the other side is able to be actuated for clutching or declutching. For clutching or declutching, the actuation lever 63 moves in the movement axis X by means of the force applied onto the control lever 61, and pushes the pressure plate 65 towards the external friction disc 64.

Frictional clutch 60 comprises also an internal friction disc 66 located inside of the cover 10 and able to be engaged onto a frictional surface 29 of the cover 10. During clutching operation, the friction between internal friction disc 66 and the frictional surface 29 creates warm-up of the cover 10.

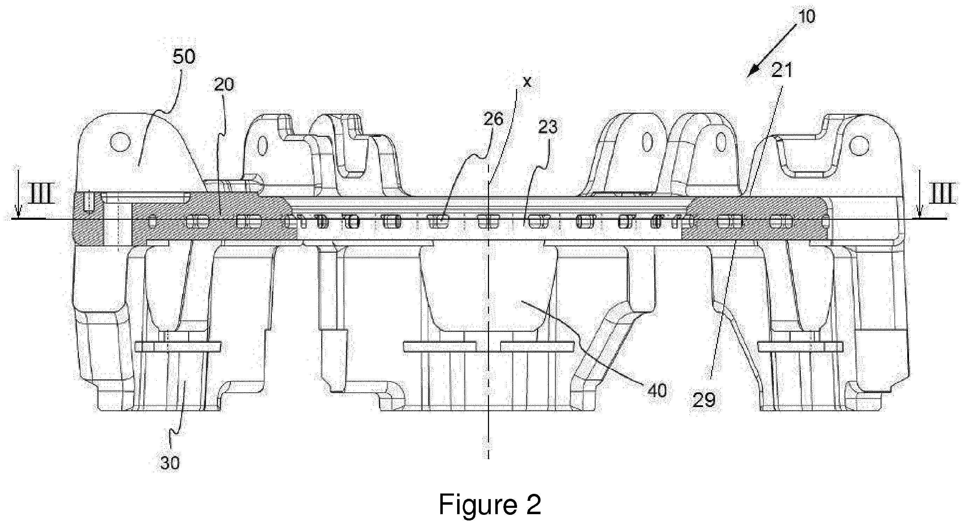

With reference to Figure 2, at least one channel 26 is provided inside the body portion 20. One end of the channel 26 is opened to the inner gap 25 through the inner wall 23, and the other end of the channel 26 extends towards the outer wall 22. In order to provide extension of the channel 26 length, the channel 26 extends in a manner drawing a curve from the inner wall 23 towards the outer wall 22. Pluralities of channels 26 are provided around the center of the inner gap 25. In other words, pluralities of channels 26 are provided such that there is a specific distance in between on the body portion 20 and within a predetermined arrangement. The channels 26 arriving at the lateral gaps 40 are opened outwardly from the outer wall 22. In order to provide opening of the channels 26 outwardly which cannot be opened outwardly from the outer wall 22, there are discharge openings 24 extending from the channel 26 towards a lateral face 21 of the body portion 20.

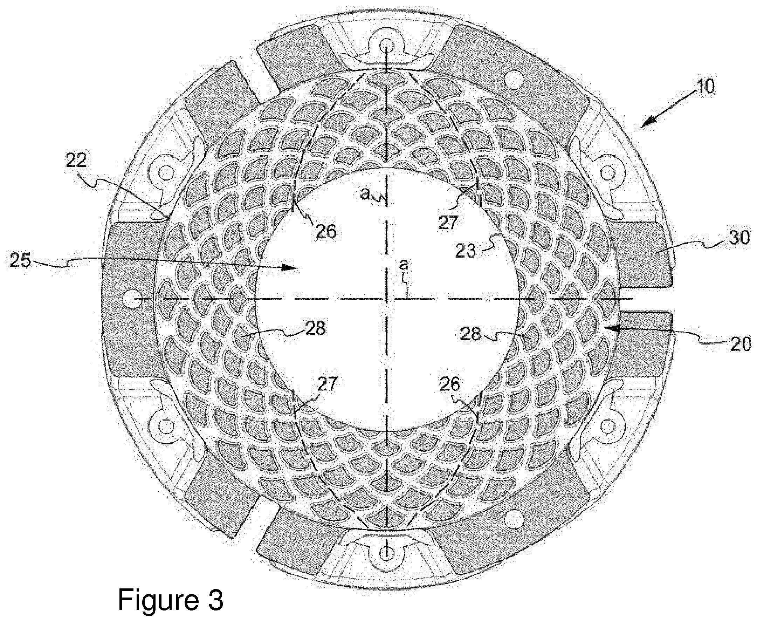

With reference to Figure 3, Cartesian coordinate axes passing through the center of the inner wall 23 and separating the body portion 20 into four regions are defined as the symmetry axes a. There is one each symmetry channels 27 provided in a symmetrical manner with respect to said symmetry axes a of each channel 26. In other words, while the channels 26 extend in a manner drawing an arc in clockwise direction, the symmetry channels 27 extend in a manner drawing an arc which extends in the counter-clockwise direction. Because of said structure, the channels 26 and the symmetry channels 27 intersect with each other. The portions which remain outside of the channels 26 and the symmetry channels 27 are defined as column 28. The columns 28 are shaped depending on the form of the channels 26 and the symmetry channels 27. The columns 28 are provided in the form of a triangle whose one edge is formed in a convex manner and whose other two edges are formed in a concave manner. The joining point of the concave edges faces the inner wall side and the convex edge remains on the outer wall side.

Thanks to the pluralities of channels 26 and thanks to the symmetry channels 27, the heat convection area is increased. The air, which enters into the channels 26 and into the symmetry channels 27 during rotation of the cover 10, provides reduction of the temperature of the cover 10. Since the channels 26 and the symmetry channels 27 are symmetric, heat transfer occurs in the same manner and in an independent manner from the rotation direction of the cover 10. Moreover, the discharge of air entering into the channels 26 and into the symmetry channels 27 is realized through the discharge openings 24.

On the other hand, the concave edges of the columns 28 provide partial divertion of the air entering into the channel 26 and into the symmetry channel 27 and guiding said air into the adjacent channel 26 or into the symmetry channel 27. By means of this, inside the channels 26 and inside the symmetry channels 27, heat transfer is increased by means of convection as air circulation.

As illustrated in figure 3, the cover comprises a plurality of channels 26 provided on an imaginary plane defined in a parallel manner in the axial distance with respect to said frictional surface 29 and provided along a curve extending from the inner diameter of said body portion 20 towards the outer diameter of said body portion 20. The channels 26 and the symmetry channels 27 are provided in arc form and the axis of the arc form is arranged radially offset in relation to the axis of revolution X.

Since the heat is removed from the cover 10, the increase of the temperature on the friction clutch is prevented. Thanks to the invention, the cover 10 is prevented from reaching high temperatures and the cracks and breakages which may occur at excessive temperatures and the deteriorations which may occur in the clutch material are prevented. Moreover, the mass of the cover obtained is reduced. Thanks to the reduced mass, the carbon dioxide emission of the vehicle is reduced.

## Claims

1. A friction clutch cover (10) having a body portion (20) in circular form comprising an outer wall (22) and an inner wall (23) facing an inner gap (25) provided at the center thereof, in order to be used in frictional clutches positioned between the engine output and the transmission shaft in tractors, **characterized by** comprising at least one channel (26) extending from the inner wall (23) towards the outer wall (22) inside the body portion (20),
wherein pluralities of channels (26) are provided inside the body portion (20) such that there is a specific distance in between, and wherein each channel (26) comprises one each symmetry channels (27) which pass through the center of the body portion (20) and provided in a symmetric manner with respect to the symmetry axes (a) which separate the body portion (20) into four regions.

2. A friction clutch cover (10) according to claim 1, wherein the channel (26) is provided in a non-linear form.

3. A friction clutch cover (10) according to claim 2, wherein the channel (26) is provided in arc form.

4. A friction clutch cover (10) according to any one of the preceding claims, wherein at least one discharge opening (24) is provided which opens outwardly and which extends from at least one of the channels (26) towards a lateral surface (21) of the body portion (20).

5. A friction clutch cover (10) according to claim 4, wherein pluralities of discharge openings (24) are provided in a connected manner to the channel (26) and to the symmetry channels (27).

6. A friction clutch cover (10) according to any one of the preceding claims, comprising a frictional surface (29) ordered to rub onto a friction disc.

7. A frictional clutch (60) comprising at least a friction disc (66) and a friction clutch cover (10) according to any one of the claims 1 to 6, said friction clutch cover (10) comprising a frictional surface (29) which rubs onto the friction disc (66).

## Patentansprüche

1. Reibkupplungsdeckel (10) mit einem Körperteil (20) in Kreisform, umfassend eine Außenwand (22) und eine Innenwand (23), die einem inneren Spalt (25) zugekehrt ist, der in der Mitte davon vorgesehen ist, zur Verwendung in Reibkupplungen, die zwischen dem Motorausgang und der Getriebewelle in Traktoren positioniert sind, **dadurch gekennzeichnet, dass** er mindestens einen Kanal (26) umfasst, der sich von der Innenwand (23) zu der Außenwand (22) im Körperteil (20) erstreckt,
wobei mehrere Kanäle (26) so in dem Körperteil (20) vorgesehen sind, dass es einen bestimmten Abstand zwischen ihnen gibt, und wobei jeder Kanal (26) jeweils einen Symmetriekanäle (27) umfasst, die durch die Mitte des Körperteils (20) verlaufen und bezüglich der Symmetrieachsen (a), die den Körperteil (20) in vier Bereiche trennen, symmetrisch vorgesehen sind.

2. Reibkupplungsdeckel (10) nach Anspruch 1, wobei der Kanal (26) in einer nicht linearen Form vorgesehen ist.

3. Reibkupplungsdeckel (10) nach Anspruch 2, wobei der Kanal (26) in Bogenform vorgesehen ist.

4. Reibkupplungsdeckel (10) nach einem der vorhergehenden Ansprüche, wobei mindestens eine Austrittsöffnung (24) vorgesehen ist, die nach außen mündet und die sich von mindestens einem der Kanäle (26) zu einer Seitenfläche (21) des Körperteils (20) erstreckt.

5. Reibkupplungsdeckel (10) nach Anspruch 4, wobei mehrere Austrittsöffnungen (24) auf mit dem Kanal (26) und den Symmetriekanälen (27) verbundene Weise vorgesehen sind.

6. Reibkupplungsdeckel (10) nach einem der vorhergehenden Ansprüche, der eine Reibfläche (29) umfasst, die an eine Reibscheibe reiben soll.

7. Reibkupplung (60), die mindestens eine Reibscheibe (66) und einen Reibkupplungsdeckel (10) nach einem der Ansprüche 1 bis 6 umfasst, wobei der Reibkupplungsdeckel (10) eine Reibfläche (29) umfasst, die an der Reibscheibe (66) reibt.

## Revendications

1. Un couvercle d'embrayage à friction (10) ayant une partie de corps (20) de forme circulaire comprenant une paroi externe (22) et une paroi interne (23) faisant face à un espace interne (25) prévu au centre de celle-ci, afin d'être utilisé dans les embrayages à friction positionnés entre la sortie du moteur et l'arbre de transmission dans les tracteurs, **caractérisé en ce qu'**il comprend au moins un canal (26) s'étendant de la paroi interne (23) vers la paroi externe (22) à l'intérieur de la partie de corps (20),dans lequel des pluralités de canaux (26) sont prévus à l'intérieur de la partie de corps (20) de telle sorte qu'il y ait une distance spécifique entre les deux, et dans lequel chaque canal (26) comprend chacun un canal de symétrie (27) qui passe par le centre de la partie de corps (20) et prévu de manière symétrique par rapport aux axes de symétrie (a) qui séparent la partie de corps (20) en quatre régions.

2. Couvercle d'embrayage à friction (10) selon la revendication 1, dans lequel le canal (26) est prévu sous une forme non linéaire.

3. Couvercle d'embrayage à friction (10) selon la revendication 2, dans lequel le canal (26) est prévu en forme d'arc.

4. Couvercle d'embrayage à friction (10) selon l'une quelconque des revendications précédentes, dans lequel au moins une ouverture d'évacuation (24) est prévue qui s'ouvre vers l'extérieur et qui s'étend depuis au moins un des canaux (26) vers une surface latérale (21) de la partie de corps (20).

5. Couvercle d'embrayage à friction (10) selon la revendication 4, dans lequel plusieurs ouvertures d'évacuation (24) sont prévues de manière raccordées au canal (26) et aux canaux de symétrie (27).

6. Couvercle d'embrayage à friction (10) selon l'une quelconque des revendications précédentes, comprenant une surface de friction (29) destinée à frotter sur un disque de friction.

7. Embrayage à friction (60) comprenant au moins un disque de friction (66) et un couvercle d'embrayage à friction (10) selon l'une quelconque des revendications 1 à 6, ledit couvercle d'embrayage à friction (10) comprenant une surface de friction (29) qui frotte sur le disque de friction (66).
